# EUROPEAN PATENT APPLICATION

(11) **EP 4 734 340 A1**
(43) Date of publication of application: **29.04.2026**
(21) Application number: 25210867.5
(22) Date of filing: 23.10.2025
(51) Int. Cl.: H02K 11/20, H02K 11/25

(54) **ELECTRIC MACHINE**

(30) Priority: 25.10.2024 IT 202400023904
(71) Applicant: SPAL Automotive S.r.l., 42015 Correggio (Reggio Emilia) (IT)
(72) Inventor: SPAGGIARI, Alessandro, CORREGGIO (RE) (IT)
(74) Representative: Puggioli, Tommaso

(57) **Abstract**

An electric machine comprises: an electronic module (1) comprising a printed circuit board (2), at least one conductive track coupled to the printed circuit board (2) and at least partly defining an electric power circuit, a conductive element (7) disposed so as to connect a first track portion of said conductive track and a second track portion of said conductive track to determine the closure of the electric power circuit; the electronic module (1) comprises a first heat-sensitive joint between the conductive element (7) and the first track portion held in place by a heat-sensitive joint and positioned on the side opposite the printed circuit board (2) with respect to the conductive track; the electric machine comprises an elastic element (15) pressed against the conductive element (7) to exert a force (F) on the heat-sensitive joint which is configured to yield to said force (F) if subjected to a temperature higher than a predetermined threshold temperature, and a support (11) which houses the electronic module (2); the electronic module (1) is housed in the support (11) with the conductive track and the conductive element (7) disposed towards the support (11); the elastic element (15) is disposed on the side opposite the conductive track with respect to the support (11) and operates between the conductive element (7) and the support (11) so that the force (F) pushes the conductive element away from the conductive track.

## Description

This invention relates to an electric machine and in particular to an electric machine for automotive applications.

Increasingly common in the automotive sector are electric machines used as motors to drive fans intended to remove heat, for example, from the radiating bodies used to cool vehicle motors.

In such applications, the market demand is for electric machines to meet increasingly stringent safety requirements, also for protecting the vehicle against malfunctioning and exceptional events, regarding the electric machine itself, which could cause it to undergo a sudden increase in temperature.

In this sector there is, in particular, a need for intrinsic safety mechanisms to turn off the power supply of the electric machine in the event of overheating, before the temperature can reach levels considered dangerous.

European patent EP3641110, in the name of the present Applicant, has for an object an electric machine where a conductive element electrically connects two branches of a conductive power track by means of two heat-sensitive joints.

The conductive tracks and the conductive element form part of an electronic power circuit of the electric machine, pressed against the cap of the electric machine in order to dissipate heat.

The conductive element is pressed away from the tracks by a spring which forms part of the elastic system that forces the electronic system against the cap and which exerts a force on the heat-sensitive joints.

These joints are designed to yield if subjected to a temperature higher than a predetermined threshold temperature so that when the joints yield, the spring pushes the conductive element away from the tracks causing the electric power circuit to open.

The Applicant has noticed a critical drawback in the prior solution, connected with the fact that the PCB of the electronic circuit must be contoured to allow the spring to pass.

Another critical drawback noticed by the Applicant is a difficulty checking whether the spring is correctly positioned, since a wrong position might lead to the protection system not working correctly.

In this context, our intention is to propose an electric machine and a method for assembling it which are capable of overcoming at least some of the drawbacks of the prior art and of meeting the above mentioned need.

An aim of this invention is to provide an electric machine provided with a protection system which does not require the PCB of the electronic circuit to have a special contoured shape.

An aim of this invention is to provide an electric machine provided with a protection system which is more reliable than that of the prior art solutions. These aims are achieved by an electric machine and a method for assembling it comprising the technical features described in one or more of the accompanying claims. The dependent claims correspond to possible different embodiments of the invention.

According to a first aspect, this invention relates to an electric machine.

The electric machine comprises an electronic power supply module comprising a printed circuit board and a plurality of conductive tracks coupled to the printed circuit board and at least partly defining an electric power circuit.

The conductive tracks may be in the form of a separate structure (frame) added and connected to the printed circuit board or integrated in the printed circuit board itself.

The electronic module comprises a conductive element disposed so as to connect a first track and a second track of the conductive tracks and positioned on the side opposite the printed circuit board with respect to the conductive tracks.

The electronic module comprises a heat-sensitive joint between a connecting portion of the conductive element and the first conductive track so the conductive element is held in place by the heat-sensitive joint.

The electric machine comprises an elastic element pressed against the conductive element to exert a force on the heat-sensitive joint which is configured to yield to said force if subjected to a temperature higher than a predetermined threshold temperature.

The conductive element determines the closure of the electric power circuit by electrically connecting the first and second tracks. Yielding of the heat-sensitive joint causes the electric power circuit to open.

The electric machine comprises a support which houses the electronic module.

The electronic module is housed in the support with the conductive tracks and the conductive element facing towards the support.

The elastic element is substantially positioned on the side opposite the conductive tracks with respect to the support.

The elastic element operates between the conductive element and the support so that the force of the elastic element pushes the conductive element away from the conductive tracks when the heat-sensitive joint yields.

Preferably, the support has a seat for the electronic module and preferably the electronic module is fastened in the respective seat.

Preferably, the support has a plurality of supporting teeth for the printed circuit board.

Preferably, the support has a cavity or opening at the conductive element. The conductive element preferably has a protruding portion that protrudes from the connecting portion to the first track through the heat-sensitive joint. The protruding portion is inserted in the opening of the support preferably in such a way as to pass through the support, and the elastic element is positioned on the side opposite the conductive tracks with respect to the support.

Preferably, the elastic element operates between the protruding portion of the conductive element and the support so that the force of the elastic element pushes the connecting portion of the conductive element away from the conductive track towards the support.

Preferably, the elastic element is a leaf spring.

Preferably, the support has a seat for the elastic element.

Preferably, the seat for the elastic element and the elastic element are shaped so that the elastic element, once inserted, cannot accidentally come out of the seat.

Preferably, in particular in the case where the elastic element is a leaf spring, the seat of the elastic element is delimited at least by two parallel side strips which define a guide for inserting the leaf spring into the seat. Preferably, the leaf spring has at least one curled end to make it easier to insert the spring into the respective seat.

The elastic element may comprise a bimetal.

In the case where the elastic element is a spring, the conductive element is subjected to a substantially fixed, constant force, whether the electric machine is in operation or not.

In the case where the elastic element comprises a bimetal, the force the conductive element is subjected to varies according the temperature. The bimetal and the heat-sensitive joint are configured in such a way that, at the predetermined threshold temperature, the force of the bimetal corresponds at least to the force at which the heat-sensitive joint yields. Advantageously, with the bimetal, at least the heat-sensitive joint is, on average, subjected to strain only when the electric machine is in operation, thus stressing the heat-sensitive joint less.

Advantageously, the elastic element with bimetal is easier to insert into the seat because it generally has less deformation or preloading than a spring. Preferably, the support comprises at least one stop for the connecting portion, positioned along a thrust direction of the elastic element. Preferably, the elastic element is configured to move the conductive element towards the stop after the heat-sensitive joint has yielded. Preferably, the stop is positioned so as to stop the conductive element at a stop position such as to continue pressing the elastic element against the conductive element, in particular against the protruding portion thereof, with sufficient residual pressure to hold the connecting portion in abutment against the stop.

Preferably, the conductive element comprises a (second) connecting portion for connecting the conductive element to the second track and positioned on the side opposite the (first) connecting portion with respect to the protruding portion.

Preferably, the conductive element is welded to the second track via the corresponding (second) connecting portion and a corresponding (second) heat-sensitive joint.

Preferably, the conductive element is positioned to overlap the first and second tracks so as to define a bridge across the first and second tracks. Preferably, the protruding portion defines a crown of the bridge which is substantially in the shape of an Ω.

Preferably, the support comprises a (second) stop for the (second) portion, positioned along a thrust direction of the elastic element. Preferably, the elastic element is configured to move the conductive element towards the (second) stop after the (second) heat-sensitive joint has yielded.

The (second) stop is positioned so as to stop the conductive element at a stop position such as to continue pressing the elastic element against the conductive element, with sufficient residual pressure to hold the (second) connecting portion in abutment against the (second) stop.

The support may comprise a connecting fitting between the first and the second stop, substantially at the conductive element. The first stop, the connecting fitting and the second stop delimit the cavity in the support. Preferably, the support comprises at least one protuberance at the first track and facing towards the track to oppose the movement of the first track away from the printed circuit board if the heat-sensitive joint yields. The elastic element, by pushing the conductive element, under high temperature conditions which might damage all the welds on the electronic module, might indeed also entrain the first track, which is, instead, stopped by the protuberance.

According to an aspect, this invention relates to a method for assembling an electric machine according to the preceding aspect.

The method comprises: assembling the electronic module including the conductive element, coupling the electronic module to the support, engaging the elastic element with the protruding portion of the conductive element and with the support after coupling the electronic module to the support.

Further features and advantages of the invention are more apparent in the exemplary, hence non-limiting description of a preferred but non-exclusive embodiment of an electric machine and a method for assembling it.

The description is set out below with reference to the accompanying drawings which are provided solely for purposes of illustration without limiting the scope of the invention and in which:
Figure 1 shows an electric machine according to this disclosure in an exploded, perspective view;
Figure 2 shows a detail of the electric machine of Figure 1 in a perspective view with some parts cut away for greater clarity;
Figure 3 shows a detail of the electric machine of Figure 1 in a perspective view with some parts cut away for greater clarity;
Figure 4 shows a detail of the electric machine of Figure 1 in a perspective cross section with some parts cut away for greater clarity;
Figure 5 shows a detail of the electric machine of Figure 1 in a perspective cross section with some parts cut away for greater clarity;
Figure 6 shows a detail of an electric machine according to this disclosure in a schematic, perspective view;
Figure 7 shows the detail of Figure 6 in a perspective cross section;
Figure 8 shows a detail of an electric machine according to this disclosure in a schematic, perspective view;
Figure 9 shows the detail of Figure 8 in a cross sectional view.

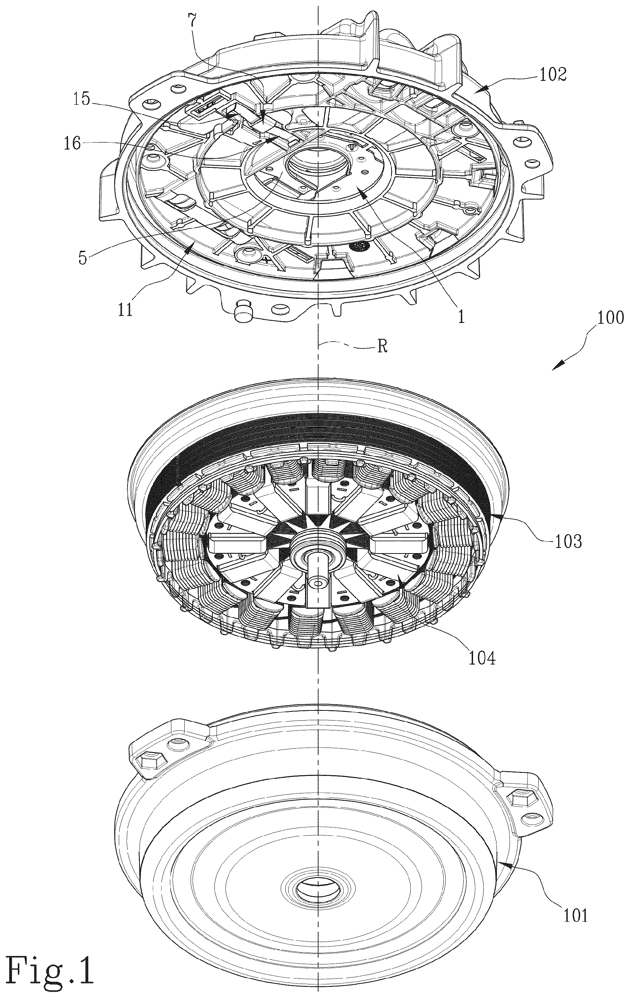

With reference to Figure 1, the numeral 100 denotes an electric machine according to this disclosure and described in detail herein only insofar as necessary for understanding this disclosure.

The electric machine 100 is a rotary electric machine and, in the preferred embodiment of it, it is a brushless electric motor of the sealed type, that is to say without any opening giving access to the inside of it except possibly for pressure relief valves. Express reference is made to this embodiment without thereby losing in generality.

The electric machine 100 comprises a casing 101 and a cap 102 for closing the casing 101 to define, together with the casing 101, a closed, preferably sealed, enclosure or container.

The electric machine 100 comprises a stator 103, preferably of the wound type and not described further, inserted and locked in the casing 101. The electric machine 100 comprises a rotor 104, preferably with permanent magnets, not described further, associated with the stator 103 and connected to the casing 101 and to the cap 102 rotatably about a rotation axis R.

The electric machine 100 comprises an electronic module, which is denoted in its entirety by the numeral 1 and which, in the embodiment illustrated by way of example, is inserted and housed in the cap 102.

The electronic module 1 comprises a printed circuit board 2 (or PCB) and a plurality of electronic power components 3 and corresponding power pins 4.

The electronic power components 3 comprise, for example, a plurality of power transistors, for example MOSFETs, power capacitors and other components not illustrated. The MOSFETs are, for example, electrically connected to the stator 103 to modulate its voltages and electrical currents in such a way as to drive and control the rotation of the rotor 104.

The electronic module 1 comprises a plurality of conductive tracks, one of which is denoted by way of example by the numeral 5, coupled to the printed circuit board 2 between the power pins 4 and the electronic power components 3 so as to form an electric power circuit 6 for powering the electronic power components 3.

The conductive tracks 5 are coupled to an underside face 2a of the printed circuit board 2.

In the embodiments illustrated, the conductive tracks 5 are in the form of a separate structure (frame) added and connected to the printed circuit board 2.

In an alternative embodiment, not illustrated, the conductive tracks 5 are integrated in the printed circuit board 2 and accessible from the underside face 2a thereof.

The electronic module 1 comprises a conductive element 7 disposed so as to connect a first track portion 5a and a second track portion 5b of the conductive track 5.

The conductive element is positioned on the side opposite the printed circuit board 2 with respect to the conductive track 5.

In the embodiment illustrated by way of example, the conductive element 7 has a first connecting portion 7a for connecting the track portion 5a and a second connecting portion 7b for connecting the track portion 5b.

The conductive element 7 has a protruding portion 7c which, in the examples illustrated, protrudes from the first connecting portion 7a and from the second connecting portion 7b.

The protruding portion 7c is spaced from the first connecting portion 7a and from the second connecting portion 7b on the opposite side with respect to the conductive track 5.

The second connecting portion 7b is positioned on the side opposite the first connecting portion 7a with respect to the protruding portion 7c.

In the example illustrated, the conductive element 7 is positioned to overlap the first and second track portions 5a, 5b so as to define a bridge across the first and second track portions 5a, 5b.

The protruding portion 7c defines a crown of the bridge which is substantially in the shape of an Ω.

The electronic module 1 comprises a first heat-sensitive joint 8a between the first connecting portion 7a of the conductive element 7 and the first track portion 5a so the conductive element 7 is held in place by the first heat-sensitive joint 8a.

In the example illustrated, the electronic module 1 comprises a second heat-sensitive joint 8b between the second connecting portion 7b of the conductive element 7 and the second track portion 5b so the conductive element 7 is held in place by the second heat-sensitive joint 8b.

The heat-sensitive joints 8a, 8b are made by welding and comprise a layer of brazing alloy, preferably an alloy of tin and silver.

Preferably, in particular to prevent the conductive element 7 from rotating while it is being welded to the track 5, the first and second track portions 5a, 5b each have a respective seat 9, 10. Preferably, the first and second connecting portions 7a, 7b are each shaped to match the respective seat 9, 10.

The electric machine 1 comprises a support 11 which houses the electronic module 1.

The electronic module 1 is housed in the support 11 with the conductive track 5 and the conductive element 7 disposed towards the support 11. The support 11 has a seat 12 for the electronic module 1 and, preferably, the electronic module 1 is fastened in the seat 12.

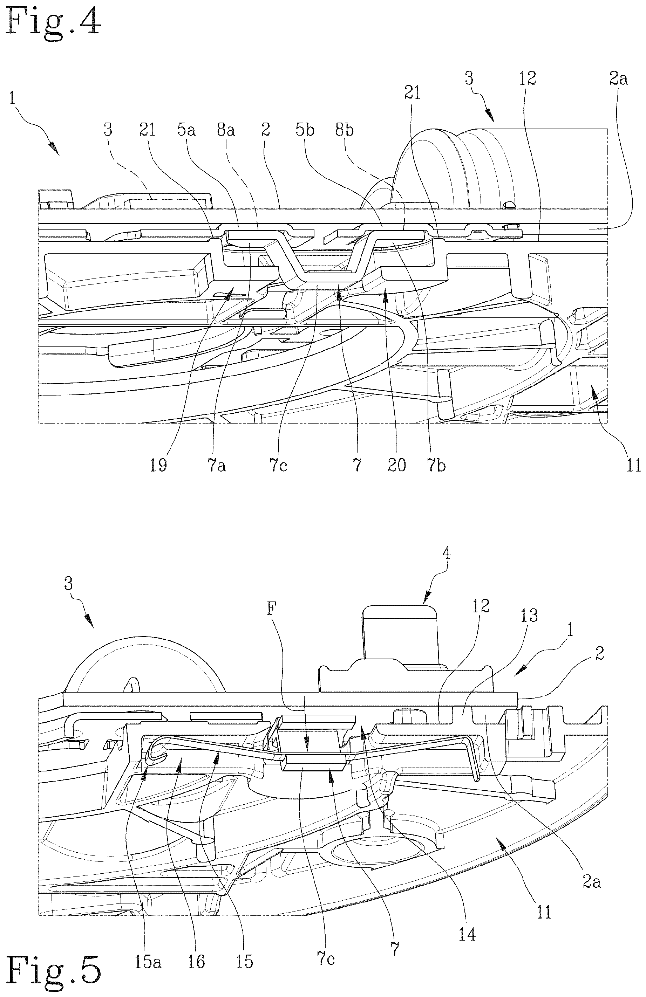

In the embodiment illustrated, the support 11 has a plurality of supporting teeth 13, one of which is shown in Figure 5, for supporting the printed circuit board 1.

The support 11 is interposed between the electronic module 1 and the stator 103.

The support 11 is preferably made of self-extinguishing, electrically insulating plastics.

The support 11 has a lateral surface which is shaped to match the cap 102 so as to reduce, in practice, the possibility of movement of the electronic module 1.

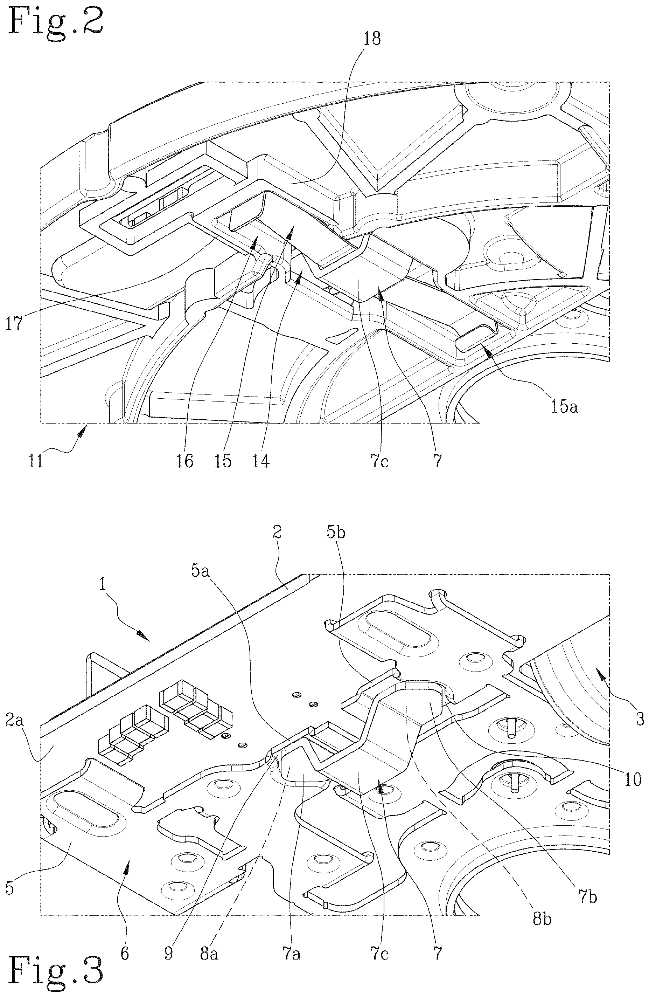

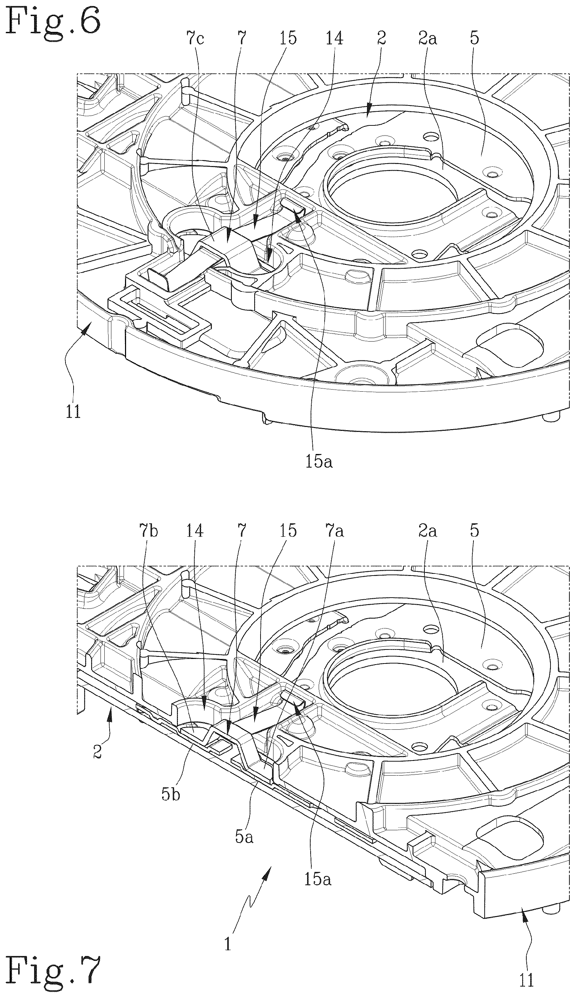

The support 11 has an opening or cavity 14 at the conductive element 7. The protruding portion 7c is inserted in the opening 14 so as to pass through the support 11, as shown, for example, in Figures 2 and 6.

The electric machine 100 comprises an elastic element 15 which is pressed against the conductive element 7 to exert a force F on the heat-sensitive joints 8a, 8b.

The heat-sensitive joints 8a, 8b are configured to yield to the force F if subjected to a temperature higher than a predetermined threshold temperature.

The conductive element 7 determines the closure of the electric power circuit 6 by electrically connecting the first and second track portions 5a, 5b and yielding of the heat-sensitive joints 8a, 8b causes the electric power circuit 6 to open.

In an alternative embodiment, not illustrated, the conductive element 7 is fixed to only one between the first and the second track portion 5a, 5b by a corresponding heat-sensitive joint 8a, 8b and is permanently connected electrically to the other so that if the temperature rises above the threshold temperature, the single heat-sensitive joint 8a, 8b breaks under the pressure of the elastic element 15, causing the electric power circuit 6 to open.

The elastic element 15 is positioned on the side opposite the conductive track 5 with respect to the support 11.

The elastic element 15 operates between the conductive element 7 and the support 11 so that the force F pushes the connecting portions 7a, 7b of the conductive element 7 away from the conductive track 5 towards the support 11.

The elastic element 15 operates between the protruding portion 7c of the conductive element 7 and the support 11 so that the force F pushes the connecting portions 7a, 7b of the conductive element 7 away from the conductive track 5 towards the support 11.

In the example illustrated, the elastic element 7 is inserted between the protruding portion 7c of the conductive element 7 and the support 11 so that the force F pushes the connecting portions 7a, 7b of the conductive element 7 away from the conductive track 5 towards the support 11.

In the example illustrated, the elastic element 7 is a leaf spring.

As illustrated, the support 11 has a seat 16 for the elastic element 15. The seat 16 and the elastic element 15 are shaped so that the elastic element 15, once inserted into the seat 16, cannot accidentally come out of the seat 16.

In the example embodiment, the seat 16 for the elastic element 15 is delimited at least by two parallel side strips 17, 18 which define a guide for inserting the elastic element 15 into the seat 16.

As illustrated, the elastic element 15 has at least one curled end 15a to make it easier to insert the elastic element 15 into the respective seat 16. In an embodiment not illustrated, the elastic element 15 may comprise a substantially known bimetal.

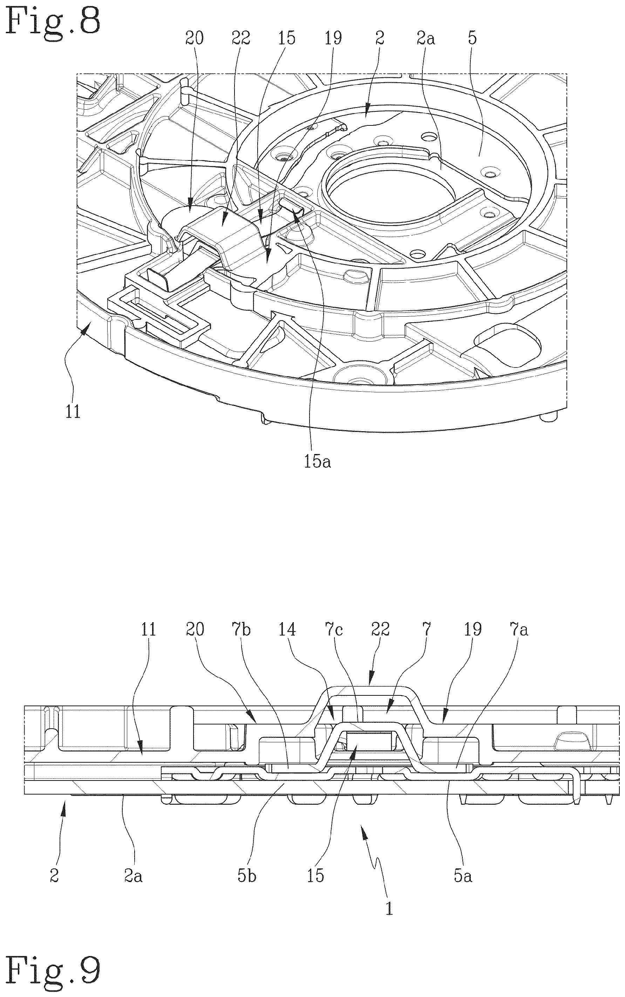

With reference in particular to Figures 4 and 9, it is noted that in the embodiments illustrated, the support 11 comprises a first stop 19 for the first connecting portion 7a, positioned along a thrust direction of the elastic element 15.

The thrust direction of the elastic element 15 corresponds substantially to the direction of the force F which is parallel to the rotation axis R. Preferably, the elastic element 15 is configured to move the conductive element 7 towards the first stop 19 after the first heat-sensitive joint 8a has yielded.

The stop 19 is positioned so as to stop the conductive element 7 at a stop position such as to continue pressing the elastic element 15 against the conductive element 7, in particular against the protruding portion 7c thereof, with sufficient residual pressure to hold the connecting portion 7a in abutment against the stop 19.

Preferably, the support comprises a second stop 20 for the second connecting portion 7b positioned along the thrust direction of the elastic element 15. The elastic element 17 is configured to move the conductive element 7 towards the second stop 20 after the second heat-sensitive joint 8b has yielded.

The second stop 20 is positioned so as to stop the conductive element 7 at a stop position such as to continue pressing the elastic element 15 against the conductive element 7 with sufficient residual pressure to hold the second connecting portion 7b in abutment against the second stop 20. In the embodiment of Figures 6 and 7, the support 11 is without the stops 19 and/or 20 and the conductive element 7 is free to move away from the support 11 after the first heat-sensitive joint 8a and/or the second heat-sensitive joint 8b have yielded.

In the embodiment of Figures 8 and 9, the support 11 comprises a connecting fitting 22 for connecting the first stop 19 to the second stop 20. The first stop 19, the connecting fitting 22 and the second stop 20 delimit the cavity 14 in the support 11.

Preferably, the support 11 comprises at least one protuberance 21 at the first track portion 5a and facing towards the first track portion 5a to oppose the movement thereof away from the printed circuit board 2 if the first heat-sensitive joint 8a yields. The elastic element 15, by pushing the conductive element 7, under high temperature conditions which might damage all the welds on the electronic module 1, might indeed also entrain the first track portion 5a, which is, instead, stopped by the protuberance 21.

A method for assembling an electric machine 100 is described limitedly to the steps necessary for understanding this disclosure and with reference, for simplicity, to a machine 1 of the type described above.

The method comprises: assembling the electronic module 1 including the conductive element 7, coupling the electronic module 1 to the support 11, engaging the elastic element 15 with the conductive element 7 and with the support 11 after coupling the electronic module 1 to the support 11.

In particular, the assembly method comprises engaging the elastic element 15 with the protruding portion 7c of the conductive element 7.

In the example illustrated, the elastic element 15 is a leaf spring which is preferably inserted in the seat 16 by translation. The leaf spring is inserted under the conductive element 7 with the curled portion 15a and is pushed in until it is inserted completely into the seat 16.

## Claims

1. An electric machine comprising:
- an electronic module (1) comprising a printed circuit board (2), at least one conductive track (5) coupled to the printed circuit board (2) and at least partly defining an electric power circuit (6), a conductive element (7) disposed so as to connect a first track portion (5a) of said conductive track (5) and a second track portion (5b) of said conductive track (5) to determine the closure of the electric power circuit (6), said electronic module (1) comprising a first heat-sensitive joint (8a) between a first connecting portion (7a) of said conductive element (7) and said first track portion (5a), said conductive element (7) being held in place by the first heat-sensitive joint (8a) and being positioned on the side opposite the printed circuit board (2) with respect to said conductive track (5), said electric machine comprising:
- an elastic element (15) pressed against said conductive element (7) to exert a force (F) on said first heat-sensitive joint (8a), said first heat-sensitive joint (8a) being configured to yield under said force (F) if subjected to a temperature higher than a predetermined threshold temperature in order to cause said electric power circuit (6) to open;
- a support (11) which houses the electronic module (2), said electric machine being **characterized in that** said electronic module (1) is housed in the support (11) with the conductive track (5) and the conductive element (7) facing towards the support (11), said elastic element (15) being disposed on the side opposite the conductive track (5) with respect to the support (11) and operating between said conductive element (7) and said support (11) so that said force (F) pushes said first connecting portion (7a) away from said conductive track (5).

2. The electric machine according to claim 1, wherein said support (11) is provided with a first seat (16) for said elastic element (15).

3. The electric machine according to claim 1 or 2, wherein said support (11) comprises, for said first connecting portion (7a), a first stop (19) positioned along a thrust direction of the elastic element (15), said elastic element (15) being configured to move said conductive element (7) towards said first stop (19) after said first heat-sensitive joint (8a) has yielded.

4. The electric machine according to claim 3, wherein said first stop (19) is positioned so as to stop the conductive element (7) at a stop position such as to continue pressing the elastic element (15) against the conductive element (7) with sufficient residual pressure to hold said first connecting portion (7a) in abutment against the first stop (19).

5. The electric machine according to any one of the preceding claims, wherein said conductive element (7) comprises a second connecting portion (7b), said second connecting portion (7b) being positioned on the side opposite the first connecting portion (7a) with respect to the protruding portion (7c), said conductive element (7) being coupled to the second track portion (5b) through said second connecting portion (7b) and a second heat-sensitive joint (8b), said conductive element (7) being positioned to overlap the first and second track portions (5a, 5b) so as to define a bridge across the first and second track portions (5a, 5b), said protruding portion (7c) defining a crown of said bridge.

6. The electric machine according to claim 5, wherein said support (11) comprises, for said second connecting portion (7b), a second stop (20) positioned along a thrust direction of the elastic element (15), said elastic element (15) being configured to move said conductive element (7) towards said second stop (20) after said second heat-sensitive joint (8b) has yielded.

7. The electric machine according to claim 6, wherein said second stop (20) is positioned so as to stop the conductive element (7) at a stop position such as to continue pressing the elastic element (15) against the conductive element (7) with sufficient residual pressure to hold said second connecting portion (7b) in abutment against said second stop (20).

8. The electric machine according to any one of the preceding claims, wherein said support (11) comprises a first stop (19) for said first connecting portion (7a) and a second stop (20) for said second connecting portion (7b), said first and second stops being positioned along a thrust direction of the elastic element (15), said elastic element (15) being configured to move said conductive element (7) towards said second stop (20) after said second heat-sensitive joint (8b) has yielded, said support (11) comprising a connecting fitting (22) for connecting the first stop (19) to the second stop (20).

9. The electric machine according to any one of the preceding claims, wherein said elastic element (15) is a leaf spring.

10. The electric machine according to claim 9, wherein said support (11) is provided with a seat (16) for said leaf spring, said seat (16) being delimited by at least two parallel side strips (17, 18) which define a guide for inserting said leaf spring into said seat (16).

11. The electric machine according to claim 9 or 10, wherein said leaf spring has at least one curled end (15a).

12. The electric machine according to any one of the preceding claims, wherein said elastic element (15) comprises a bimetal.

13. The electric machine according to any one of the preceding claims, wherein said support (11) is provided with a plurality of supporting teeth (13) for said printed circuit board (2).

14. The electric machine according to any one of the preceding claims, wherein said support (11) comprises at least one protuberance (21) at said first track portion (5a) to oppose the movement at least of the first track portion (5a) away from the printed circuit board (2) if the first heat-sensitive joint (8a) yields.

15. The electric machine according to any one of the preceding claims, wherein said support (11) is provided with an opening (14) at said conductive element (7), said conductive element (7) having a protruding portion (7c) protruding from said first connecting portion (7a) inserted in said opening (14) so as to pass through said support (11).

16. A method for assembling an electric machine according to any one of claims from 1 to 15, comprising
- assembling the electronic module (1) including the conductive element (7);
- coupling the electronic module (1) to the support (11);
- engaging the elastic element (15) with said conductive element (7) and with said support (11) after coupling the electronic module (1) to the support (11).
